# EUROPEAN PATENT SPECIFICATION

(11) **EP 2 781 324 B1**
(45) Date of publication and mention of the grant of the patent: **14.09.2016**
(21) Application number: 12850447.9
(22) Date of filing: 13.11.2012
(51) Int. Cl.: B29C 33/12, B29C 45/14, B29C 45/33, B29L 31/14, B29C 33/30

(54) **MOLD, AND METHOD FOR MANUFACTURING MESH-INTEGRATED FILTER USING SAME**
FORM UND VERFAHREN ZUR HERSTELLUNG EINES MASCHENINTEGRIERTEN FILTERS DAMIT
MOULE ET PROCÉDÉ DE FABRICATION D'UN FILTRE À TAMIS INTÉGRÉ L'UTILISANT

(30) Priority: 17.11.2011 KR 20110120454
(43) Date of publication of application: 24.09.2014
(73) Proprietor: Hanchang Enpla Co., Ltd., Anseong-si, Gyeonggi-do 456-831 (KR)
(72) Inventor: KIM, Ji Hyoung, Anseong-si Gyeonggi-do 456-728 (KR); PARK, Sang Dae, Gyeonggi-do 443-736 (KR)
(74) Representative: Grünecker Patent- und Rechtsanwälte PartG mbB
(86) International application number: PCT/KR2012/009554
(87) International publication number: WO 2013/073813

(56) References cited:
- JP-A- H0 724 934
- JP-A- H0 732 376
- JP-A- H0 732 376
- JP-A- H06 320 581
- JP-A- 2006 069 174
- JP-A- 2011 045 813
- KR-A- 20050 079 349
- KR-A- 20050 079 349
- KR-A- 20120 045 289
- US-A- 3 350 747
- US-A1- 2006 051 450

## Description

### [Technical Field]

The present invention relates to a mesh-integrated filter, and more particularly, to a mold which can form a mesh-integrated filter in a closed state and can improve productivity by eliminating a separate process for assembling a mesh and a filter, and a method of manufacturing a mesh-integrated filter using the same.

### [Background Art]

A general anti-lock brake system (ABS) for vehicles detects wheel slip to control braking pressure applied to the wheels, thereby preventing the wheels from locking up during braking operation.

Through the anti-lock brake system, braking operation can be safely performed by preventing wheel slip while maintaining directionality during the braking operation. The brake system includes a plurality of solenoid valves which open and close oil passages of brake oil pressure lines to control braking pressure. The solenoid valves include normally open solenoid valves which are normally kept in an open state and normally closed solenoid valves which are normally kept in a closed state.

The solenoid valve is press-fitted into a bore of a modulator block and includes a hollow valve housing having an entrance and an exit for flow of fluid. A cylindrical sleeve is coupled to one end of the valve housing such that an armature placed in the valve housing can move forward and rearward, and a valve core for advancing and retracting the armature while closing an open portion of the sleeve is coupled to an open end of the sleeve. The armature opens and closes an orifice of a valve sheet through forward and rearward movement thereof. To this end, the armature includes a shut-off portion extending toward the valve sheet through the hollow portion of the valve housing.

A filter assembly having a filter is placed at an outer side of the valve housing.

A solenoid valve having a filter assembly is disclosed in Korean Patent No. 10-1009266 (entitled "Solenoid Valve").

Cylindrical filters such as the one described in the present application can be formed by an inner tool to form mesh bars in an axial direction and an outer tool forming mesh bars in a circumferential direction. Such filters are disclosed, for example, in JP H07-32376 A as well as JP H07-24934 A.

US 2006/051450 A1 and KR 2012/0045289 A disclose molds having top and bottom plates, forming members disposed in between said top and bottom plates to shape the outer portions of a cylindrical filter. The inside of such filters is formed by a core disposed on a shaft or a pin. After the filter is formed and the mold is opened, the filter is removed from the core by moving an ejector sleeve provided on the shaft or pin towards the filter and pushing it off the core. This can cause the filter to be damaged, for example, if the filter falls off the shaft or pin and out of the mold in an unpredictable way.

### [Disclosure]

### [Technical Problem]

A filter assembly for solenoid valves in the related art is manufactured by injection-molding a target product surrounding a portion of a mesh to assemble the target product to the mesh, causing inconvenience and difficulty in assembly and assembly defects. Accordingly, there is a need to solve this problem.

It is an aspect of the present invention to provide a mold which can form a mesh-integrated filter in a closed state and can improve productivity by eliminating a separate process for assembling a mesh and a filter, and a method of manufacturing a mesh-integrated filter using the same.

### [Technical Solution]

In accordance with one aspect of the present invention, a mold includes: a lower body; a protruding pin provided to the lower body to protrude upward; a plurality of sliders slidably disposed on the lower body to move forward toward the protruding pin and surrounding a circumference of the protruding pin; an upper body covering upper sides of the sliders and having an injection hole formed therethrough such that a liquid resin is injected into a gap between the protruding pin and the sliders through the injection hole; and a shaping portion for forming a mesh-integrated filter upon hardening of the liquid resin. The invention is characterized in that the protruding pin is provided to the lower body so as to be moved upward and downward, the mesh-integrated filter is placed on an upper side of the lower body when the protruding pin is lowered toward a lower side of the lower body, and the protruding pin is plated with chromium to prevent rust and to allow easy separation from the mesh-integrated filter.

The shaping portion may include: longitudinal strips protruding parallel to each other from a circumferential surface of the protruding pin in an axial direction of the protruding pin; and transverse strips protruding from an inner surface of each of the sliders such that the transverse strips are inclined with respect to the longitudinal strips and are brought into contact with the longitudinal strips.

Each of the sliders may define spaces in a circumferential direction of the protruding pin such that reinforcing ribs are formed to reinforce the mesh-integrated filter in an axial direction thereof.

The transverse strips may be discontinuously formed in the circumferential direction of the protruding pin to secure fluidity of the liquid resin.

Each of the transverse strips may have rounded portions at opposite sides thereof. Each of the sliders may include a plurality of slide plates stacked one above another and fixed to arrange a plurality of transverse strips.

The protruding pin may have a frustoconical shape, an outer diameter of which is gradually decreased from a lower side to an upper side thereof.

In accordance with another aspect of the present invention, a method of manufacturing a mesh-integrated filter moving sliders of a mold forward to surround a protruding pin protruding upward from the lower body of the mold; lowering an upper body of the mold to contact the protruding pin and upper sides of the sliders; pouring a liquid resin though an injection hole formed through the upper body of the mold to fill a gap between the protruding pin and the sliders with the liquid resin; and forming the mesh-integrated filter with longitudinal strips of the protruding pin and transverse strips of the sliders contacting each other by hardening the liquid resin. The method is characterized by lowering the protruding pin toward a lower side of the lower body to separate the mesh-integrated filter from the protruding pin, wherein the protruding pin is plated with chromium to prevent rust and to allow easy separation from the mesh-integrated filter.

The method may further include: moving the upper body upward and the sliders rearward, after forming the mesh-integrated filter.

### [Advantageous Effects]

As described above, the mold and the method of manufacturing a mesh-integrated filter using the same according to the present invention can form a mesh-integrated filter in a closed state and can improve productivity by eliminating a separate process for assembling a mesh and a filter.

### [Description of Drawings]

Fig. 1 is a perspective view of a mesh-integrated filter according to one embodiment of the present invention.
Fig. 2 is a cut-away perspective view of the mesh-integrated filter according to the embodiment of the present invention.
Fig. 3 is a perspective view of a mold for manufacturing a mesh-integrated filter according to one embodiment of the present invention.
Fig. 4 is an exploded perspective view of the mold for manufacturing a mesh-integrated filter according to the embodiment of the present invention.
Fig. 5 is a longitudinal sectional view of the mold for manufacturing a mesh-integrated filter according to the embodiment of the present invention.
Fig. 6 is an enlarged view of a protruding pin and sliders having strips in the mold for manufacturing a mesh-integrated filter according to the embodiment of the present invention.
Fig. 7 is a plan view of the protruding pin and the sliders having the strips in the mold for manufacturing a mesh-integrated filter in a closed state, according to the embodiment of the present invention.
Fig. 8 is a perspective view of sliders of a mold for manufacturing a mesh-integrated filter according to another embodiment of the present invention.
Fig. 9 is a sectional view of the sliders of Fig. 8.
Fig. 10 is a perspective view of sliders of a mold for manufacturing a mesh-integrated filter according to a further embodiment of the present invention.
Fig. 11 is a sectional view of the sliders of Fig. 10.
Fig. 12 is a view of another embodiment of a slider according to the present invention.
Fig. 13 is an exploded perspective view of the sliders of Fig. 12.
Fig. 14 is a front view of a protruding pin of a mold for manufacturing a mesh-integrated filter according to one embodiment of the present invention.
Fig. 15 is a flowchart of a method of manufacturing a mesh-integrated filter according to one embodiment of the present invention.

### [Best Mode]

Hereinafter, embodiments of the invention will be described with reference to the accompanying drawings. It should be noted that the drawings are not to precise scale and may be exaggerated in thickness of lines or size of components for descriptive convenience and clarity alone. Furthermore, the terms used herein are defined by taking functions of the present disclosure into account and can be changed according to user or operator's custom or intention. Therefore, definition of the terms should be made according to the overall disclosure set forth herein.

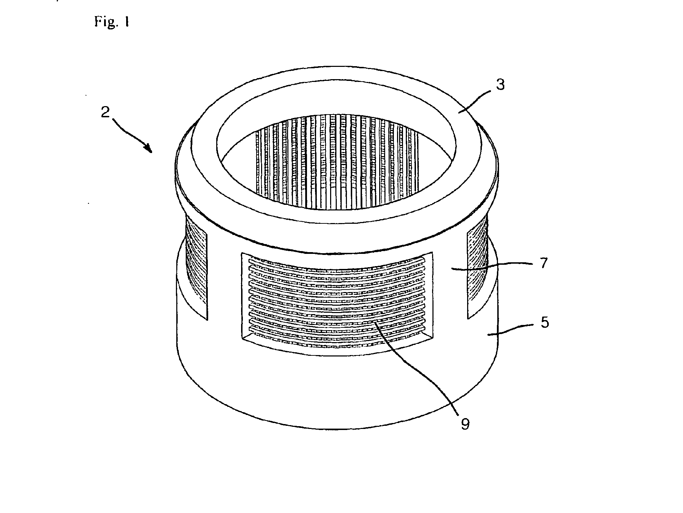

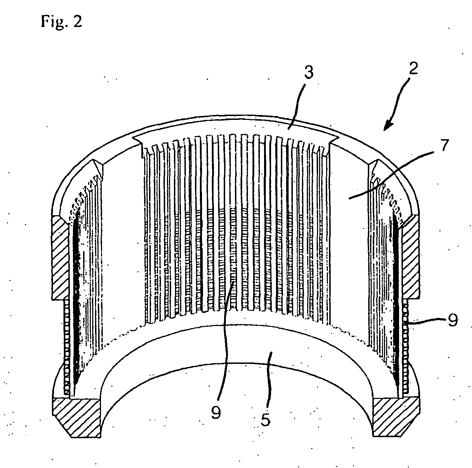

Fig. 1 is a perspective view of a mesh-integrated filter according to one embodiment of the present invention, and Fig. 2 is a cut-away perspective view of the mesh-integrated filter according to the embodiment of the present invention.

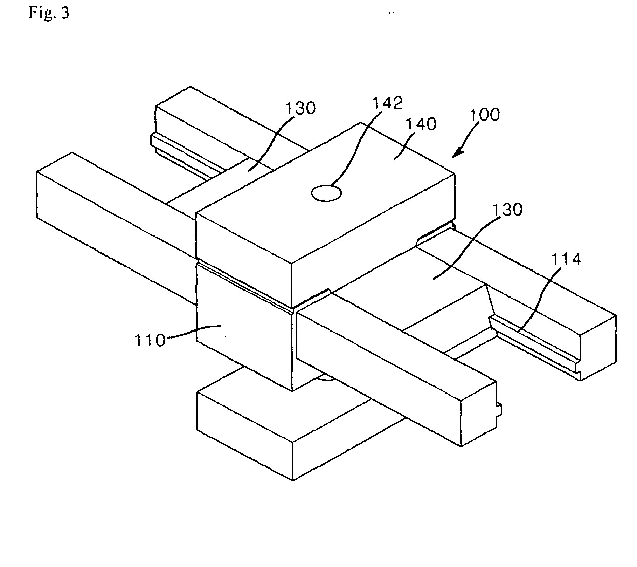

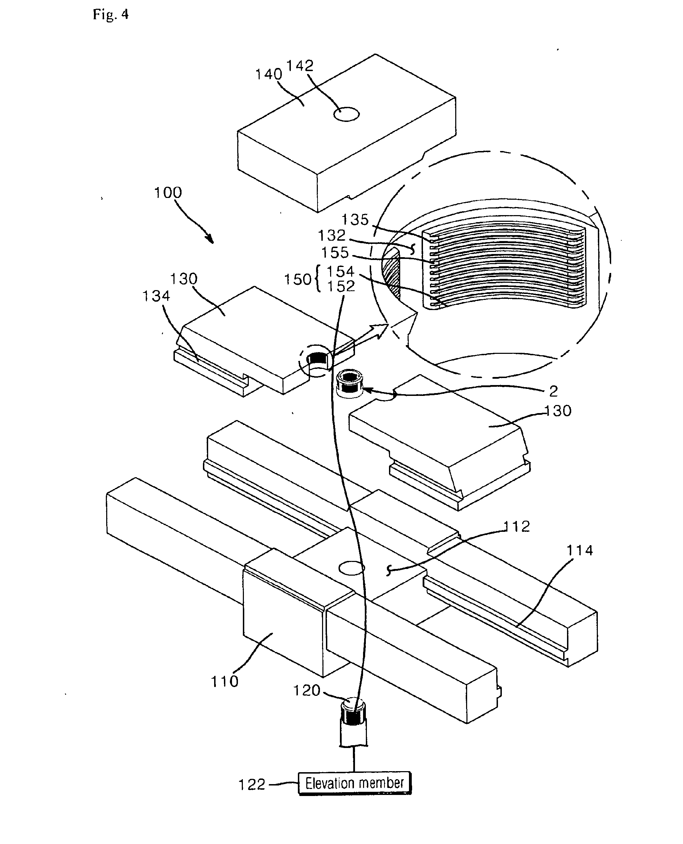

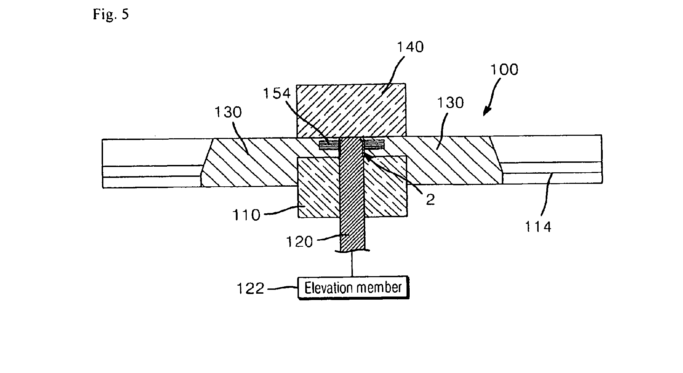

Fig. 3 is a perspective view of a mold for manufacturing a mesh-integrated filter according to one embodiment of the present invention, Fig. 4 is an exploded perspective view of the mold for manufacturing a mesh-integrated filter according to the embodiment of the present invention, and Fig. 5 is a longitudinal sectional view of the mold for manufacturing a mesh-integrated filter according to the embodiment of the present invention.

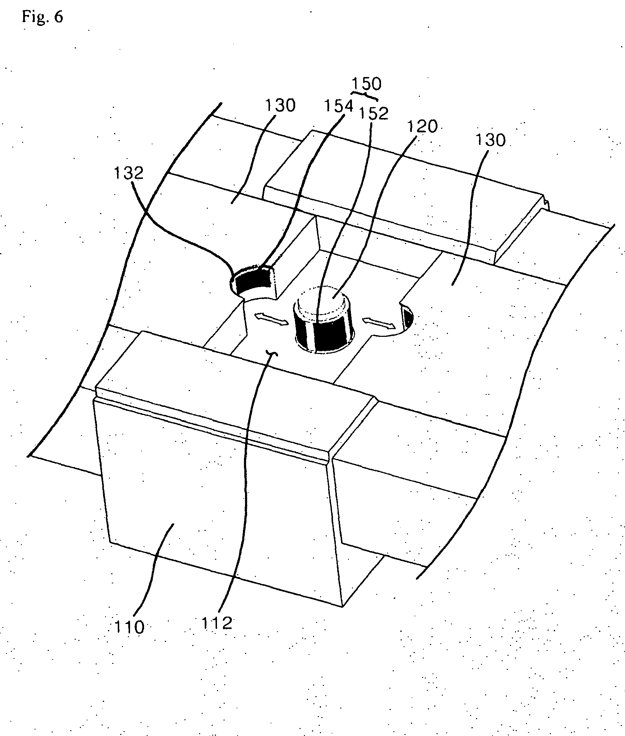

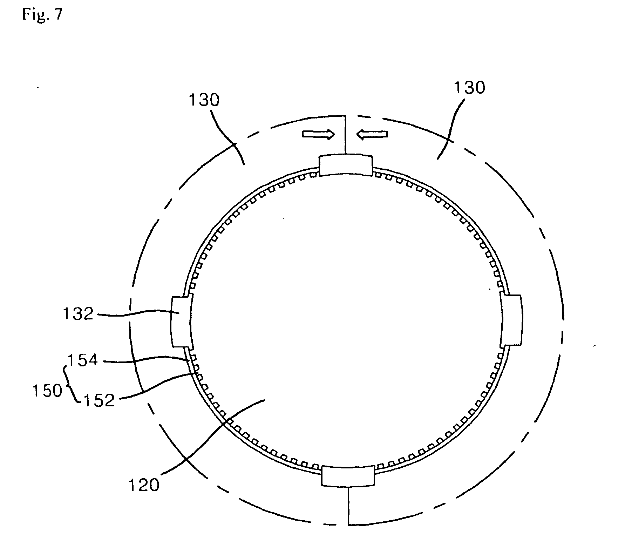

Fig. 6 is an enlarged view of a protruding pin and sliders having strips in the mold for manufacturing a mesh-integrated filter according to the embodiment of the present invention, and Fig. 7 is a plan view of the protruding pin and the sliders having the strips in the mold for manufacturing a mesh-integrated filter in a closed state, according to the embodiment of the present invention.

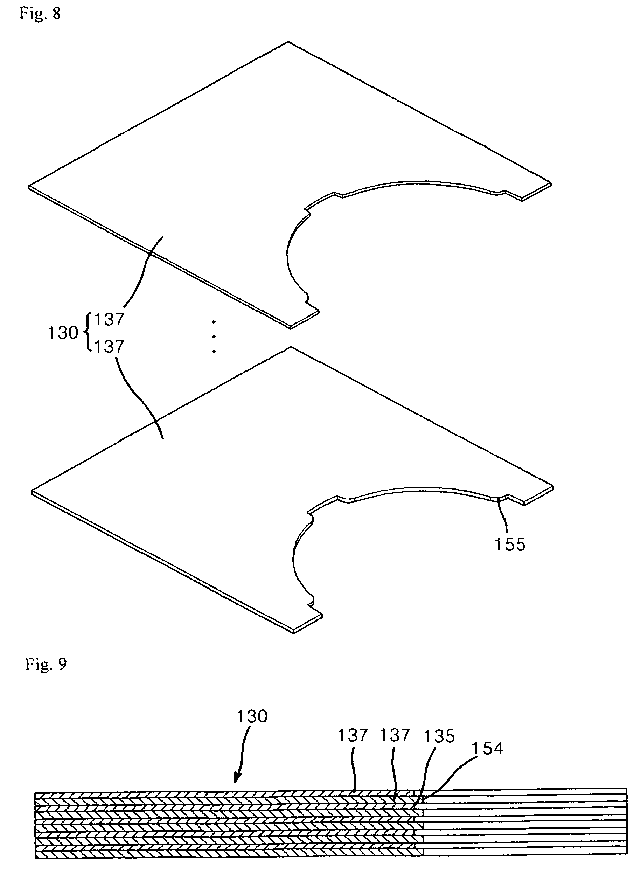

Fig. 8 is a perspective view of sliders of a mold for manufacturing a mesh-integrated filter according to another embodiment of the present invention, and Fig. 9 is a sectional view of the sliders of Fig. 8.

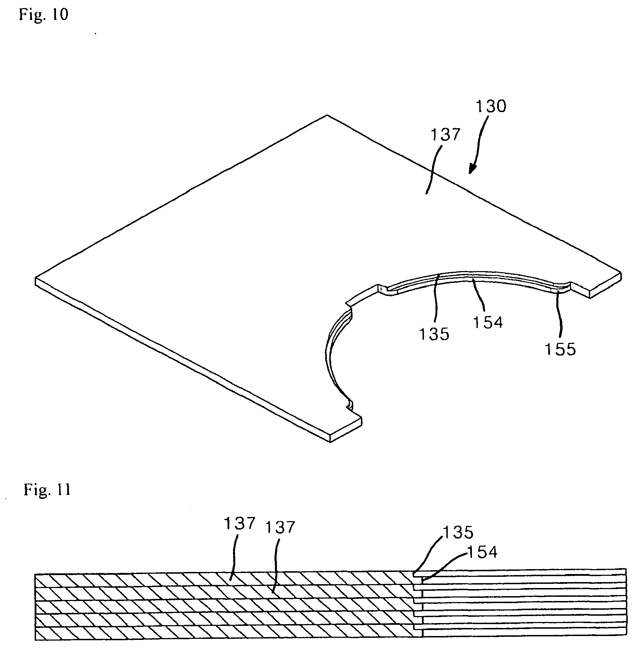

Fig. 10 is a perspective view of sliders of a mold for manufacturing a mesh-integrated filter according to a further embodiment of the present invention, and Fig. 11 is a sectional view of the sliders of Fig. 10.

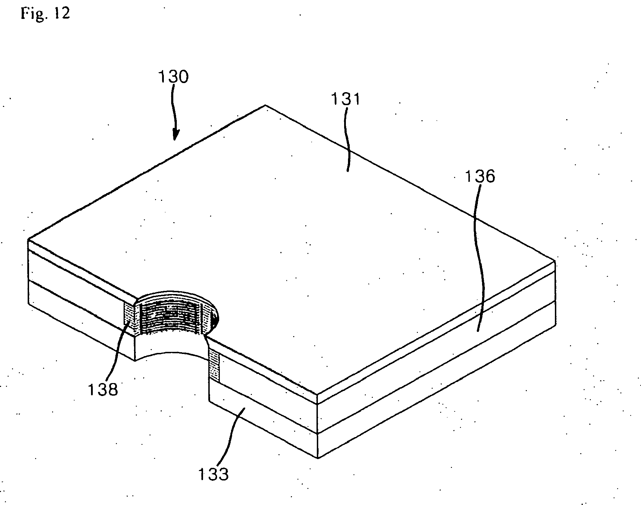

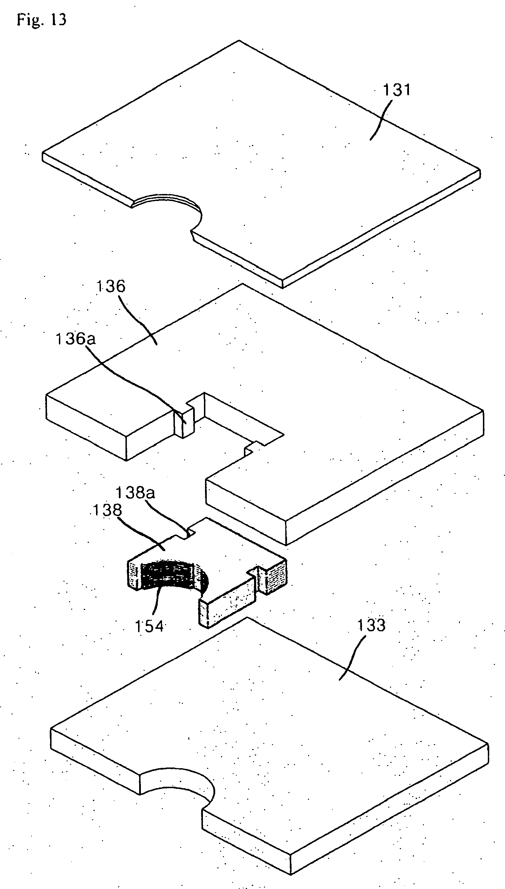

Fig. 12 is a view of another embodiment of a slider according to the present invention, and Fig. 13 is an exploded perspective view of the sliders of Fig. 12.

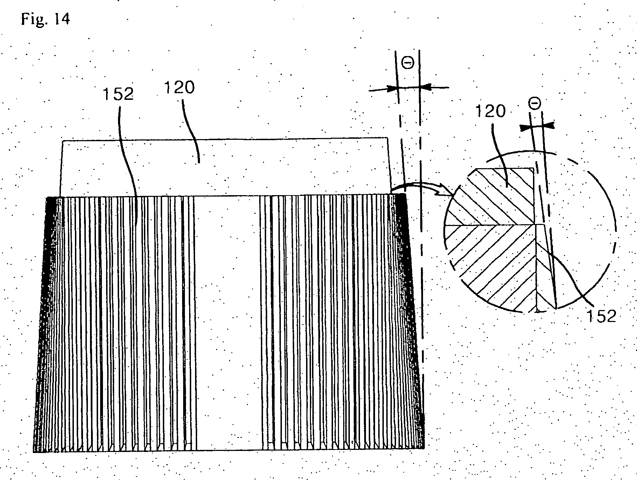

Fig. 14 is a front view of a protruding pin of a mold for manufacturing a mesh-integrated filter according to one embodiment of the present invention.

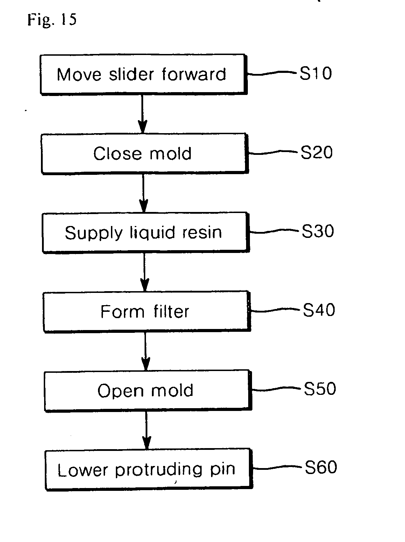

Fig. 15 is a flowchart of a method of manufacturing a mesh-integrated filter according to one embodiment of the present invention

Referring to Figs. 3, 4, and 5, a mold 100 for manufacturing a mesh-integrated filter 2 according to one embodiment of the invention includes a lower body 110, a protruding pin 120, sliders 130, an upper body 140, and a shaping portion 150.

In particular, the mesh-integrated filter 2 is applied to a filter assembly of a solenoid valve for a braking system, and serves to filter a working fluid. In addition, the mesh-integrated filter 2 may be applied to systems for various operations, such as electronic stability program (ESP), vehicle dynamic control (VDC), dynamic stability control (DSC), vehicle skid control (VSC), and electronic stability control (ESC).

As shown in Figs. 1 and 2, the mesh-integrated filter 2 has a circular or polygonal tubular shape, and includes an upper rim 3, a lower rim 5, reinforcing ribs 7 which connect the upper rim 3 to the lower rim 5, and a mesh 9 formed between reinforcing ribs 7. The upper rim 3, the lower rim 5, and the reinforcing ribs 7 serve to strengthen the mesh-integrated filter 2 or to maintain the shape of the mesh-integrated filter 2, and the mesh 9 serves to filter a working fluid. The mesh 9 has a net shape.

The lower body 110 is placed at a lower side of the mold 100 and supports the sliders 130 and the upper body 140.

The protruding pin 120 is provided to the lower body 110 to protrude upward. The protruding pin 120 serves to form an inner shape of the formed mesh-integrated filter 2, and is formed to have a circular or polygonal column shape that conforms with a desired inner shape of the mesh-integrated filter 2.

A plurality of sliders 130 is slidably disposed on the lower body 110 to move forward, and surrounds the circumference of the protruding pin 120. The sliders 130 serve to form an outer shape of the mesh-integrated filter 2 in the course of molding, and have inner surfaces corresponding to a desired outer shape of the mesh-integrated filter 2. For convenience, each of the inner surfaces of the sliders 130 is shown as having a concave arc shape. Although two sliders 130 are shown in this embodiment, the present invention is not limited thereto.

The sliders 130 are moved forward and rearward by a cylinder or the like.

In particular, it is noted that the sliders 130 are placed on the lower body 110 to stably linearly move forward or rearward. This configuration prevents defect in the mesh-integrated filter 2 after molding.

Thus, the protruding pin 120 is secured in position in the lower body 110.

The sliders 130 are connected to the lower body 110 to be linearly moved forward and rearward. For example, the lower body 110 has a positioning recess 112 on which the sliders 130 can be seated, and guide bosses 114 protruding from inner surfaces thereof facing each other. A guide groove 134, which engages with the guide boss 114, is formed in each of the sliders 130 to enable linear reciprocation of the sliders 130 along the guide bosses 114.

In particular, the lower body 110 may include a separate stopper (not shown), which stops further movement of the sliders 130 inside the positioning recess 112 when the sliders 130 are finally moved forward or rearward.

With the sliders 130 surrounding the circumference of the protruding pin 120, the upper body 140 covers upper sides of the sliders 130 and the protruding pin 120, and an injection hole 142 is formed through the upper body 140 to allow a liquid resin to be injected into a gap between the protruding pin 120 and the sliders 130 therethrough.

The upper body 140 can be moved upward or downward by various linear actuators such as a cylinder. The upper body 140 is formed with the injection hole 142 through which the liquid resin is injected into the gap between the protruding pin 120 and the sliders 130. Here, it should be understood that the present invention is not limited to a specific position and number of injection holes 142. Of course, the injection hole 142 may be provided in an opened or closed form.

In addition, it is desirable that the mesh-integrated filter 2 be naturally formed by hardening the liquid resin after injecting the liquid resin into the gap between the protruding pin 120 and the sliders 130, with the sliders 130 surrounding the circumference of the protruding pin 120. In particular, it is desirable that the mesh 9 of the mesh-integrated filter 2 be naturally formed through hardening of the liquid resin.

Thus, the shaping portion 150 is provided to naturally form the mesh-integrated filter 2 upon hardening of the liquid resin.

As shown in Figs. 6 and 7, the shaping portion 150 includes longitudinal strips 152 and transverse strips 154.

The longitudinal strips 152 protrude from a circumferential surface of the protruding pin 120 in an axial direction of the protruding pin 120 and are arranged parallel to each other. That is, the longitudinal strips 152 have an undulating shape circumferentially formed on the circumferential surface of the protruding pin 120. In particular, the longitudinal strips 152 are integrally formed with the circumferential surface of the protruding pin 120. Of course, the number of longitudinal strips 152, that is, a pitch between the longitudinal strips 152, is not particularly limited.

In addition, the transverse strips 154 protrude from an inner surface of each of the sliders 130 facing the protruding pin 120. In particular, the transverse strips 154 are inclined with respect to the longitudinal strips 152 and arranged parallel to each other. When the sliders 130 are completely moved forward from the lower body 110 toward the protruding pin 120, the longitudinal strips 152 contact the transverse strips 154. Thus, the mesh 9 can be naturally formed as the liquid resin is hardened at a contact portion between the longitudinal strips 152 and the transverse strips 154 after the gap between the sliders 130 and the protruding pin 120 is filled with the liquid resin.

For convenience, the longitudinal strips 152 and the transverse strips 154 are shown arranged perpendicular to each other. Of course, the number of transverse strips 154, that is, a pitch between the transverse strips 154, is not particularly limited.

It is desirable that the reinforcing ribs 7 of the mesh-integrated filter 2 be naturally formed by hardening the liquid resin after injecting the liquid resin into the gap between the protruding pin 120 and the sliders 130 while the sliders 130 surround the circumference of the protruding pin 120.

Thus, the sliders 130 define spaces 132 in a circumferential direction of the protruding pin 120. As a result, the reinforcing ribs 7 can be naturally formed as the liquid resin is hardened after the spaces 132 are filled with the liquid resin.

Consequentially, each of the sliders 130 is discontinuously formed with the transverse strips 154 in the circumferential direction of the protruding pin 120. This configuration achieves natural formation of the reinforcing ribs 7 of the mesh-integrated filter 2 while securing fluidity of the liquid resin. That is, the liquid resin discontinuously forms the transverse strips 154 and thus can flow into the gap between the sliders 130 and the protruding pin 120 through the spaces 132 defined between the transverse strips 154, whereby the mesh 9 can be formed as the liquid resin is hardened after the liquid resin flows to the contact portion between the longitudinal strips 152 and the transverse strips 154.

The transverse strips 154 have rounded portions 155 at opposite sides thereof. This secures a flow passage of the liquid resin injected into the gap between the sliders 130 and the protruding pin 120, with edges of the plurality of sliders 130 contacting each other.

When the liquid resin is injected into and hardened in the gap between the sliders 130 and the protruding pin 120 in a closed state of the mold, the mesh-integrated filter 2 is formed.

Here, the closed state of the mold refers to a state in which the sliders 130 are moved forward while the transverse strips 154 of each of the sliders 130 and the longitudinal strips 152 of the protruding pin 120 contact each other, and the upper body 140 covers the sliders 130 and the protruding pin 120.

Then, the mesh-integrated filter 2 is exposed when the mold is open. Here, the open state of the mold refers to a state in which the upper body 140 is raised and the sliders 130 are moved rearward.

In particular, the mesh-integrated filter 2 is stacked on the protruding pin 120. Thus, when an operator pulls and raises the mesh-integrated filter 2, the mesh-integrated filter 2 can be damaged.

Thus, the protruding pin 120 is preferably provided to the lower body 110 so as to be moved upward or downward. That is, when the protruding pin 120 is lowered toward a lower side of the lower body 110 in an open state of the mold, the mesh-integrated filter 2 is placed on an upper side of the lower body 110.

Here, the protruding pin 120 may be elevated by an elevation member 122 such as a cylinder. In addition, the protruding pin 120 may be integrally formed with the elevation member 122, or may be detachably coupled to the elevation member 122 in various ways.

Since each of the sliders 130 is formed on the inner surface thereof with the transverse strips 154 to be separated from each other by constant intervals, a groove 135 is formed between the transverse strips 154. Each of the sliders 130 may be constituted by a single block, or by a plurality of blocks stacked one above another.

As shown in Figs. 8 and 9, in another embodiment, each of the sliders 130 is constituted by a plurality of slide plates 137 which are stacked one above another to arrange a plurality of transverse strips 154.

In particular, when the plurality of slide plates 137 is stacked one above another, the slide plates 137 are disposed to protrude alternately toward the protruding pin 120 in the longitudinal direction so as to sequentially form the transverse strips 154 and the grooves 135.

Although not shown in the drawings, the slide plates 137 may be fastened to each other in a stacked state in various ways, such as bolting and the like.

In addition, as shown in Figs. 10 and 11, in a further embodiment, each of the sliders 130 is constituted by a plurality of slide plates 137 which are stacked one above another to arrange a plurality of transverse strips 154.

In particular, each of the slide plates 137 includes one transverse strip 154 and one recess 135 such that transverse strips 154 and grooves 135 are sequentially formed when a plurality of slide plates 137 are stacked one above another. Thus, the transverse strips 154 and the grooves 135 are sequentially disposed longitudinally when the slide plates 137 are stacked one above another.

Although not shown in the drawings, the slide plates 137 may be fastened to each other in a stacked state in various ways, such as bolting and the like.

The slide plates 137 are depressed at certain portions thereof to form the spaces 132 when the slide plates 137 are stacked to form the slider 130.

Of course, each of the transverse strips 154 of the slide plates 137 is formed at opposite sides thereof with the rounded portions 155.

As shown in Figs. 12 and 13, in yet another embodiment, each of the sliders 130 includes an upper plate 131, a lower plate 133, a holder 136, and a processing tool 138.

The upper plate 131 and the lower plate 133 surface-contact the corresponding upper and lower sides of the holder 136 and the processing tool 138 to maintain a stacked state. That is, although not shown in the drawings, the upper plate 131, the holder 136, and the lower plate 133 are fastened to one another by bolting or the like.

In addition, the holder 136 serves to hold the processing tool 138 inserted into the holder 136, and the processing tool 138 is formed at a front side thereof with transverse strips 154. Here, since the transverse strips 154 are formed on the front side of the processing tool 138, the front side of the processing tool 138 is concavely formed, and thus portions of the upper plate 131 and the lower plate 133 corresponding to the processing tool 138 are also concavely formed.

In particular, the holder 136 is formed with insertion bosses 136a protruding from inner sides of the holder 136 facing each other, and the processing tool 138 is formed with insertion recesses 138a corresponding to the insertion bosses 136a. Thus, the processing tool 138 is detachably mounted to the holder 136. Accordingly, the processing tool 138 may be easily replaced when damaged or worn.

As shown in Fig. 14, the protruding pin 120 has a frustoconical shape, the outer diameter of which is gradually increased from an upper side to a lower side.

Specifically, the protruding pin 120 is inclined by a predetermined angle (θ) with respect to a vertical line from the lower side towards the upper side, so that the sectional area of the protruding pin gradually decreases toward the upper side thereof. This configuration allows easy separation of the mesh-integrated filter 2 from the protruding pin 120 as the protruding pin is lowered.

The protruding pin 120 and the longitudinal strips 152 may be subjected to plating to prevent rust, to improve strength and to allow easy separation from the mesh-integrated filter 2. In particular, the protruding pin 120 and the longitudinal strips 152 may be plated with various metals, such as chromium and titanium.

In addition, the longitudinal strips 152 are inclined by a predetermined angle θ with respect to a surface of the protruding pin 120. That is, each of the longitudinal strips 152 is inclined by a predetermined angle θ with respect to the surface of the protruding pin 120 from a lower side to an upper side such that the protruding pin 120 has a frusto-conical shape, the outer diameter of which is gradually decreased from the lower side to the upper side thereof.

More specifically, the protruding pin 120 may be originally formed in a frusto-conical shape, or otherwise each of the longitudinal strips 152 may be formed to have a thin upper side and a thick lower side on the protruding pin 120 having a cylindrical shape.

Referring to Fig. 15, a method of manufacturing a mesh-integrated filter 2 according to one embodiment includes: moving the sliders forward (S10), closing the mold (S20), supplying a liquid resin (S30), forming a filter (S40), opening the mold (S50), and lowering the protruding pin (S60).

Operation of moving the sliders forward (S10) is a process of moving the sliders 130 forward to surround the protruding pin 120 protruding upward from the lower body 110. The sliders 130 are moved toward the protruding pin 120 in the forward direction by a cylinder. Then, the sliders 130 are stopped, when the transverse strips 154 contact the longitudinal strips 152 of the protruding pin 120 or are moved a predetermined distance in the forward direction.

Operation of closing the mold (S20) is a process of lowering the upper body 140 such that the upper body 140 contacts the protruding pin 120 and the upper sides of the sliders 130.

Here, the upper body 140 is lowered by a cylinder.

Operation of supplying a liquid resin (S30) is a process of injecting the liquid resin though the injection hole 142 formed though the upper body 140 such that a gap between the protruding pin 120 and the sliders 130 is filled with the liquid resin.

Operation of forming a filter (S40) is a process of hardening the liquid resin filling the gap between the protruding pin 120 and the sliders 130 such that the mesh-integrated filter 2 is naturally formed by the longitudinal strips 152 of the protruding pin 120 and the transverse strips 154 of the sliders 130, which contact each other.

Of course, the mesh-integrated filter 2 is naturally formed with an upper rim 3, a lower rim 5, and reinforcing ribs 7 through hardening of the liquid resin filling the gap between the protruding pin 120 and the sliders 130 to support and reinforce a mesh 9 formed by the longitudinal strips 152 and the transverse strips 154.

In addition, operation of opening the mold (S50) is a process of moving the upper body 140 and the sliders 130 in a direction opposite to the movement direction of the upper body 140 and the sliders 130 when the mold is closed. Then, the upper body 140 and the sliders 130 are moved when the liquid resin is completely hardened and the mesh-integrated filter 2 is formed. Thus, the mesh-integrated filter 2 is exposed on an upper side of the lower body 110 while being covered by the protruding pin 120.

Operation of lowering the protruding pin (S60) is a process of lowering the protruding pin 120 toward a lower side of the lower body 110 and separating the mesh-integrated filter 2 from the protruding pin 120.

Here, since the protruding pin 120 and the longitudinal strips 152 are plated with chromium, the protruding pin 120 and the longitudinal strips 152 can be easily separated from the mesh-integrated filter 2. Thus, the mesh-integrated filter 2 can be prevented from defects since the mesh-integrated filter 2 is kept in a formed state.

Although some embodiments have been described with reference to the accompanying drawings and tables, it should be understood that the present invention is not limited to these embodiments and can be made in various different ways, and that various modifications, variations, and alterations can be made by those skilled in the art without departing from the scope of the present invention. Therefore, the scope of the present invention should be determined by the claims.

## Claims

1. A mold (100) comprising:
a lower body (110);
a protruding pin (120) provided to the lower body (110) to protrude upward;
a plurality of sliders (130) slidably disposed on the lower body to move forward toward the protruding pin (120) to surround a circumference of the protruding pin (120);
an upper body (140) covering upper sides of the sliders (130) and having an injection hole (142) formed therethrough such that a liquid resin is injected into a gap between the protruding pin (120) and the sliders (130) through the injection hole; and
a shaping portion (150) for forming a mesh-integrated filter (2) upon hardening of the liquid resin,
**characterized in that**
the protruding pin (120) is provided to the lower body (110) so as to be moved upward and downward,
the mesh-integrated filter (2) is placed on an upper side of the lower body (110) when the protruding pin (120) is lowered toward a lower side of the lower body, and
the protruding pin (120) is plated with chromium to prevent rust and to allow easy separation from the mesh-integrated filter (2).

2. The mold according to claim 1, wherein the shaping portion (150) comprises longitudinal strips (152) protruding parallel to each other from a circumferential surface of the protruding pin (120) in an axial direction of the protruding pin; and transverse strips (154) protruding from an inner surface of each of the sliders (130) such that the transverse strips (154) are inclined with respect to the longitudinal strips (152) and are brought into contact with the longitudinal strips (152).

3. The mold according to claim 2, wherein each of the sliders (130) defines spaces in a circumferential direction of the protruding pin (120) such that reinforcing ribs (7) are formed to reinforce the mesh-integrated filter (2) in an axial direction thereof.

4. The mold according to claim 2 or 3, wherein the transverse strips (154) are discontinuously formed in the circumferential direction of the protruding pin (120) to secure fluidity of the liquid resin.

5. The mold according to claim 2 or 3, wherein each of the transverse strips (154) has rounded portions (155) at opposite sides thereof.

6. The mold according to claim 2 or 3, wherein each of the sliders (130) comprises a plurality of slide plates (137) stacked one above another and fixed to arrange a plurality of transverse strips (154).

7. The mold according to any one of claims 1 to 3, wherein the protruding pin (120) has an outer shape, a width of which is gradually increased from an upper side to a lower side.

8. A method of manufacturing a mesh-integrated filter (2), comprising:
moving sliders (130) of a mold (100) forward to surround a protruding pin (120) protruding upward from a lower body (110) of the mold;
lowering an upper body (140) of the mold (100) to contact the protruding pin (120) and upper sides of the sliders (130);
pouring a liquid resin through an injection hole (142) formed through the upper body (140) of the mold (100) to fill a gap between the protruding pin (120) and the sliders (130) with the liquid resin; and forming a mesh-integrated filter (2) with longitudinal strips (152) of the protruding pin (120) and transverse strips (154) of the sliders (130) contacting each other by hardening the liquid resin,
**characterized by**
lowering the protruding pin (120) toward a lower side of the lower body (110) to separate the mesh-integrated filter (2) from the protruding pin, wherein the protruding pin (120) is plated with chromium to prevent rust and to allow easy separation from the mesh-integrated filter.

9. The method according to claim 8, further comprising:
moving the upper body (140) upward and the sliders (130) rearward, after forming the mesh-integrated filters.

## Patentansprüche

1. Form (100), die umfasst:
einen unteren Körper (110);
einen vorstehenden Zapfen (120), der sich im unteren Körper (110) befindet und nach oben vorsteht;
eine Vielzahl von Gleitkörpern (130), die gleitend an dem unteren Körper angeordnet sind und sich nach vorn auf den vorstehenden Zapfen (120) zu bewegen, so dass sie einen Umfang des vorstehenden Zapfens (120) umschließen;
einen oberen Körper (140), der obere Seiten der Gleitkörper (130) abdeckt und ein Einspritzloch (142) aufweist, das durch ihn hindurch ausgebildet ist, so dass ein flüssiger Kunststoff in einen Zwischenraum zwischen dem vorstehenden Zapfen (120) und den Gleitkörpern (130) über das Einspritzloch eingespritzt wird; und
einen Formungsabschnitt (150) zum Ausbilden eines Filters (2) mit integriertem Sieb beim Aushärten des flüssigen Kunststoffs,
**dadurch gekennzeichnet, dass**
der vorstehende Zapfen (120) an dem unteren Körper (110) so angeordnet ist, dass er nach oben und nach unten bewegt werden kann,
der Filter (2) mit integriertem Sieb an einer Oberseite des unteren Körpers (110) positioniert wird, wenn der vorstehende Zapfen (120) auf eine untere Seite des unteren Körpers zu abgesenkt wird, und
der vorstehende Zapfen (120) mit Chrom beschichtet ist, um Rost zu vermeiden und leichte Trennung von dem Filter (2) mit integriertem Sieb zu ermöglichen.

2. Form nach Anspruch 1, wobei der Formungsabschnitt (150) Längsstreifen (152), die in einer axialen Richtung des vorstehenden Zapfens parallel zueinander von einer Umfangsfläche des vorstehenden Zapfens (120) vorstehen, sowie Querstreifen (154) umfasst, die von einer Innenfläche jedes der Gleitkörper (130) so vorstehen, dass die Querstreifen (154) in Bezug auf die Längsstreifen (152) geneigt sind und in Kontakt mit den Längsstreifen (152) gebracht werden.

3. Form nach Anspruch 2, wobei jeder der Gleitkörper (130) Räume in einer Umfangsrichtung des vorstehenden Zapfens (120) bildet, so dass verstärkende Rippen (7) gebildet werden, die den Filter (2) mit integriertem Sieb in einer axialen Richtung desselben verstärken.

4. Form nach Anspruch 2 oder 3, wobei die Querstreifen (154) unterbrochen in der Umfangsrichtung des vorstehenden Zapfens (120) ausgebildet sind, um Fließvermögen des flüssigen Kunststoffs zu gewährleisten.

5. Form nach Anspruch 2 oder 3, wobei jeder der Querstreifen (154) abgerundete Abschnitte (155) an einander gegenüberliegenden Seiten desselben aufweist.

6. Form nach Anspruch 2 oder 3, wobei jeder der Gleitkörper (130) eine Vielzahl von Gleitplatten (137) umfasst, die übereinander geschichtet und fixiert sind, um eine Vielzahl von Querstreifen (154) auszubilden.

7. Form nach einem der Ansprüche 1 bis 3, wobei der vorstehende Zapfen (120) eine äußere Form hat, deren Breite von einer oberen Seite zu einer unteren Seite allmählich zunimmt.

8. Verfahren zum Herstellen eines Filters (2) mit integriertem Sieb, das umfasst:
Bewegen von Gleitkörpern (130) einer Form (100) nach vorn, so dass sie einen vorstehenden Zapfen (120) umschließen, der von einem unteren Körper (110) der Form nach oben vorsteht;
Absenken eines oberen Körpers (140) der Form (100), so dass er mit dem vorstehenden Zapfen (120) und oberen Seiten der Gleitkörper (130) in Kontakt kommt;
Eingießen eines flüssigen Kunststoffs über ein Einspritzloch (142), das durch den oberen Körper (140) der Form (100) hindurch ausgebildet ist, um einen Zwischenraum zwischen dem vorstehenden Zapfen (120) und den Gleitkörpern (130) mit dem flüssigen Kunststoff auszufüllen; und
Formen eines Filters (2) mit integriertem Sieb mit Längsstreifen (152) des vorstehenden Zapfens (120) und Querstreifen (154) der Gleitkörper (130), die miteinander in Kontakt sind, durch Aushärten des flüssigen Kunststoffs,
**gekennzeichnet durch**
Absenken des vorstehenden Zapfens (120) auf eine untere Seite des unteren Körpers (110) zu, um den Filter (2) mit integriertem Sieb von dem vorstehenden Zapfen zu trennen, wobei der vorstehende Zapfen (120) mit Chrom beschichtet ist, um Rost zu verhindern und
leichte Trennung von dem Filter (2) mit integriertem Sieb zu ermöglichen.

9. Verfahren nach Anspruch 8, das des Weiteren umfasst:
Bewegen des oberen Körpers (140) nach oben und der Gleitkörper (130) nach hinten nach Formen des Filters (2) mit integriertem Sieb.

## Revendications

1. Moule (100) comprenant :
un corps inférieur (110) ;
une broche en saillie (120) prévue sur le corps inférieur (110) pour faire saillie vers le haut ;
une pluralité de curseurs (130) disposés de manière coulissante sur le corps inférieur pour se déplacer vers l'avant vers la broche en saillie (120) pour entourer la circonférence de la broche en saillie (120) ;
un corps supérieur (140) recouvrant les côtés supérieurs des curseurs (130) et comportant un trou d'injection (142) formé à travers celui-ci, tel qu'une résine liquide est injectée dans l'espace compris entre la broche en saillie (120) et les curseurs (130) à travers le trou d'injection ; et
une partie de conformation (150) pour former un filtre à tamis intégré (2) lors du durcissement de la résine liquide,
**caractérisé en ce que**
la broche en saillie (120) est prévue sur le corps inférieur (110) de façon à être levée et baissée,
le filtre à tamis intégré (2) est placé sur le côté supérieur du corps inférieur (110) lorsque la broche en saillie (120) est abaissée vers le côté inférieur du corps inférieur, et
la broche en saillie (120) est recouverte de chrome pour l'empêcher de rouiller et pour permettre une séparation aisée du filtre à tamis intégré (2).

2. Moule selon la revendication 1, dans lequel la partie de conformation (150) comprend des bandes longitudinales (152) faisant saillie parallèlement les unes aux autres depuis la surface circonférentielle de la broche en saillie (120) dans la direction axiale de la broche en saillie ; et des bandes transversales (154) faisant saillie depuis la surface interne de chacun des curseurs (130), de sorte que les bandes transversales (154) sont inclinées par rapport aux bandes longitudinales (152) et sont amenées en contact avec les bandes longitudinales (152).

3. Moule selon la revendication 2, dans lequel chacun des curseurs (130) définit des espaces dans la direction circonférentielle de la broche en saillie (120), de sorte que des arêtes de renfort (7) sont formées pour renforcer le filtre à tamis intégré (2) dans sa direction axiale.

4. Moule selon la revendication 2 ou 3, dans lequel les bandes transversales (154) sont formées de façon discontinue dans la direction circonférentielle de la broche en saillie (120) pour garantir la fluidité de la résine liquide.

5. Moule selon la revendication 2 ou 3, dans lequel chacune des bandes transversales (154) comporte des parties arrondies (155) sur ses côtés opposés.

6. Moule selon la revendication 2 ou 3, dans lequel chacun des curseurs (130) comprend une pluralité de plaques de coulissement (137) empilées les unes audessus des autres et fixées de façon à agencer une pluralité de bandes transversales (154).

7. Moule selon l'une quelconque des revendications 1 à 3, dans lequel la broche en saillie (120) possède une forme externe dont la largeur augmente progressivement du côté supérieur au côté inférieur.

8. Procédé de fabrication d'un filtre à tamis intégré (2) comprenant :
le déplacement vers l'avant de curseurs (130) d'un moule (100) pour entourer une broche en saillie (120) faisant saillie vers le haut depuis un corps inférieur (110) du moule ;
l'abaissement d'un corps supérieur (140) du moule (100) pour venir en contact avec la broche en saillie (120) et les côtés supérieurs des curseurs (130) ;
le versement d'une résine liquide à travers un trou d'injection (142) formé à travers le corps supérieur (140) du moule (100) pour remplir de résine liquide l'espace compris entre la broche en saillie (120) et les curseurs (130) ; et
la formation d'un filtre à tamis intégré (2) avec des bandes longitudinales (152) de la broche en saillie (120) et des bandes transversales (154) des curseurs (130) en contact entre elles par durcissement de la résine liquide,
**caractérisé par**
l'abaissement de la broche en saillie (120) vers le côté inférieur du corps inférieur (110) pour séparer le filtre à tamis intégré (2) de la broche en saillie, dans lequel la broche en saillie (120) est recouverte de chrome pour l'empêcher de rouiller et pour permettre une séparation aisée du filtre à tamis intégré.

9. Procédé selon la revendication 8, comprenant en outre :
le déplacement du corps supérieur (140) vers le haut et des curseurs (130) vers l'arrière, après formation des filtres à tamis intégrés.
